(19) Europäisches Patentamt
European Patent Office
Office européen des brevets

(11) **EP 2 884 351 B1**

(12) **EUROPEAN PATENT SPECIFICATION**

(45) Date of publication and mention
of the grant of the patent:
**19.07.2023 Bulletin 2023/29**

(51) International Patent Classification (IPC):
*G04F 10/04* (2006.01)     *G01K 7/32* (2006.01)
*G04G 3/04* (2006.01)

(21) Application number: **13197209.3**

(52) Cooperative Patent Classification (CPC):
**G04G 3/04; G01K 7/32; G04F 10/04**

(22) Date of filing: **13.12.2013**

(54) **Sensor signal acquisition data**

Sensorsignalerfassungsdaten

Données d'acquisition de signal de capteur

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.06.2015 Bulletin 2015/25**

(73) Proprietor: **EM Microelectronic-Marin SA
2074 Marin (CH)**

(72) Inventors:
• **Sima, Ovidiu
8055 Zurich (CH)**

• **Godat, Yves
2087 Cornaux (CH)**

(74) Representative: **ICB SA
Faubourg de l'Hôpital, 3
2001 Neuchâtel (CH)**

(56) References cited:
EP-A1- 2 546 657     EP-A1- 2 546 709
US-A1- 2009 160 569     US-A1- 2012 307 866

**Description**

TECHNICAL FIELD

The present invention relates to the field of electronic circuits comprising a measurement sensor. For instance, the teachings of the present invention can be used to correct the temperature dependency of an oscillator. The invention also relates to a method of acquiring sensor clock signal data in an electronic circuit.

BACKGROUND OF THE INVENTION

A crystal oscillator is an electronic oscillator circuit which uses the mechanical resonance of a vibrating crystal of piezoelectric material to create an electrical signal with a very precise frequency. This frequency is widely used to keep track of time (as in quartz wristwatches), to provide a stable clock signal for digital integrated circuits, and to stabilize frequencies for radio transmitters and receivers. The most common type of piezoelectric resonator is the quartz crystal, and oscillator circuits incorporating such resonators are commonly known as crystal oscillators. Other piezoelectric materials such as polycrystalline ceramics may be used in similar circuits.

Although crystal oscillators offer a highly stable form of oscillator, their operation is nevertheless affected by temperature. The cut of the actual crystal element from the overall grown crystal can help to mitigate the effects of temperature, but cannot eliminate them. Thus, it is often necessary to provide a circuit that allows measuring the temperature where the oscillator is operating, and then to compensate for changes that occur as a result of temperature changes.

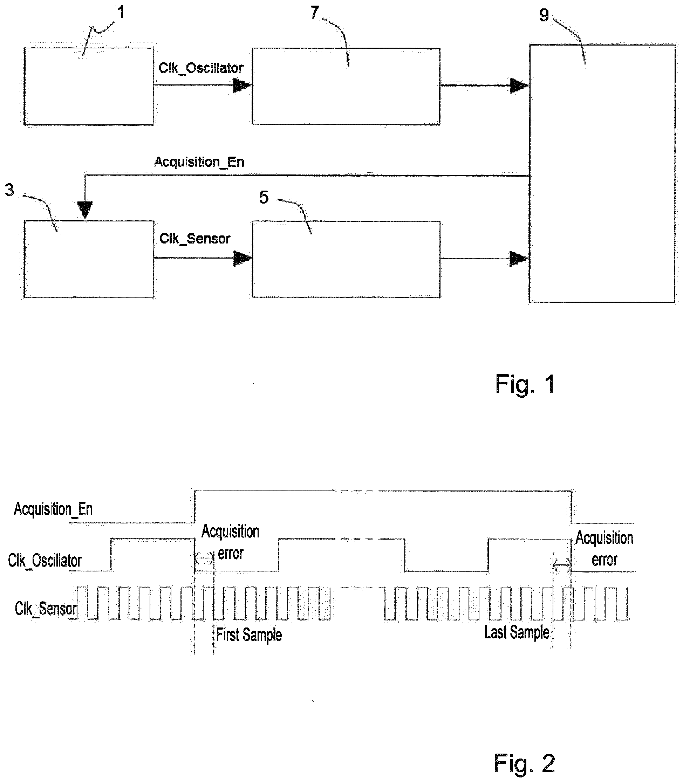

For instance, electronic watches can include means for operating a thermo-compensation function to determine the temperature dependency of the time-base quartz oscillator. Figure 1 shows an exemplary circuitry used in some known solutions to determine the temperature related error of an oscillator 1. The thermo-compensation algorithm typically allows data to be acquired from a signal from a temperature sensor 3, which is arranged to generate a temperature-dependent oscillating signal. The clocking or sampling frequency of the temperature sensor is generally greater than the oscillator frequency. A temperature sensor counter 5 is incremented at each falling or rising edge of a sensor clock signal (Clk_Sensor) during a time period defined by an oscillator counter 7. A thermo-compensation control unit 9 then decides how to take the temperature into account, so that a temperature-corrected oscillator signal can be obtained.

Figure 2 illustrates the signals shown in Figure 1. In this example, the rising edge of the acquisition enable signal (Acquisition_En) starts the data acquisition from the temperature sensor 3, i.e. the counter sensor 5 starts counting the cycles of the signal from the temperature sensor 3. The data acquisition continues until the falling edge of the acquisition enable signal. In this example, the full cycles of the temperature sensor signal (Clk_Sensor) are counted at the falling edge of the Clk_Sensor. As can be seen from Figure 2, there is an error in the data acquisition or data measurement at the beginning of the measurement and at the end of the measurement. The data acquisition error in terms of number of signal cycles can be between -1 and +1 cycles. In this particular example the error at the beginning is about +0.5 cycles, whereas at the end of the measurement (on the right hand side in Figure 2), the error is relatively large, i.e. almost -1 cycle. These two errors are then added together and the total data acquisition error in this example is about -0.5 cycles. These errors in the data acquisition may negatively affect the temperature compensation precision of the circuitry and should therefore be minimized. The effects of the errors in the data acquisition can be mitigated by having a long measurement window, but this is also not optimal, since the time required for the data acquisition would be increased.

The patent applications EP 2 546 709 A1 and EP 2 546 657 A1 describe a method and system for measuring time. It is provided to increase the computation speed and the accuracy of the measuring time. For that, there are a reference signal and M delayed signals from the reference signal with a same frequency and it is set a time window for the measuring time. A number of pulses are counted of the reference signal within the time window in order to determine an error correction factor by taking into account the delayed signals. However it is not adapted for thermo-compensated a clock signal of an oscillator of an electronic circuit in a watch, which is a drawback. US 2009/160569 A1 concerns a real time clock comprising means for correcting or compensating for offset and frequency variations caused by temperature and aging, without the need for knowing actual temperature and temperature look-up tables. US 2012/307866 A1 concerns a time-domain temperature sensing system for supporting a single-point calibration. Under a single calibration temperature, the digital output of said temperature sensing system is adjusted by a calibration circuit to a specific value, and the generated calibration parameter thereof can be stored in the same chip of the temperature sensing system or in an off-chip component such as a non-volatile memory.

SUMMARY OF THE INVENTION

It is an object of the present invention to overcome the problem identified above related to the data acquisition from a signal received from a measurement sensor, such as a temperature sensor, in an electronic circuit.

According to a first aspect of the invention, there is provided a method of acquiring data from a sensor clock signal in an electronic circuit as recited in claim 1.

Particular steps of the method are defined in the dependent claims 2 to 10.

The proposed new solution has the advantage that the data acquisition from the sensor can be done very accurately, and that the data acquisition or data sampling error can be minimized. For instance, the solution according to the present invention can be used, when applied to a watch, to correct the quartz oscillator temperature dependency in a watch. This would also mean that the timing accuracy can be improved, as the computing error introduced by the data acquisition phase can be minimized.

According to a second aspect of the invention, there is provided a computer program product for acquiring data from a sensor clock signal in an electronic circuit as recited in claim 11.

According to a third aspect of the invention, there is provided an electronic circuit for acquiring data from a sensor clock signal as recited in claim 12.

## BRIEF DESCRIPTION OF THE DRAWINGS

Other features and advantages of the invention will become apparent from the following description of non-limiting exemplary embodiments, with reference to the appended drawings, in which:

Figure 1 is a block diagram of an exemplary state of the art electronic circuit for acquiring data from a temperature sensor signal,

Figure 2 illustrates the signals as a function of time in the electronic circuit of Figure 1,

Figure 3 is a block diagram of an exemplary electronic circuit according to the present invention for acquiring data from a sensor signal,

Figure 4 is a block diagram of a delay element present in the electronic circuit of Figure 3,

Figure 5 illustrates the signals as a function of time in the circuit of Figure 3 when performing the data acquisition according to a first embodiment of the present invention,

Figure 6 is a flow-chart illustrating an example of the data acquisition according to the first embodiment of the present invention, and

Figure 7 illustrates the signals as a function of time in the circuit of Figure 3 when performing the data acquisition according to a second embodiment of the present invention.

## DETAILED DESCRIPTION OF EMBODIMENTS OF THE INVENTION

Embodiments of the present invention will now be described in detail with reference to the attached figures. Identical functional and structural elements which appear in the different drawings are assigned the same reference numerals.

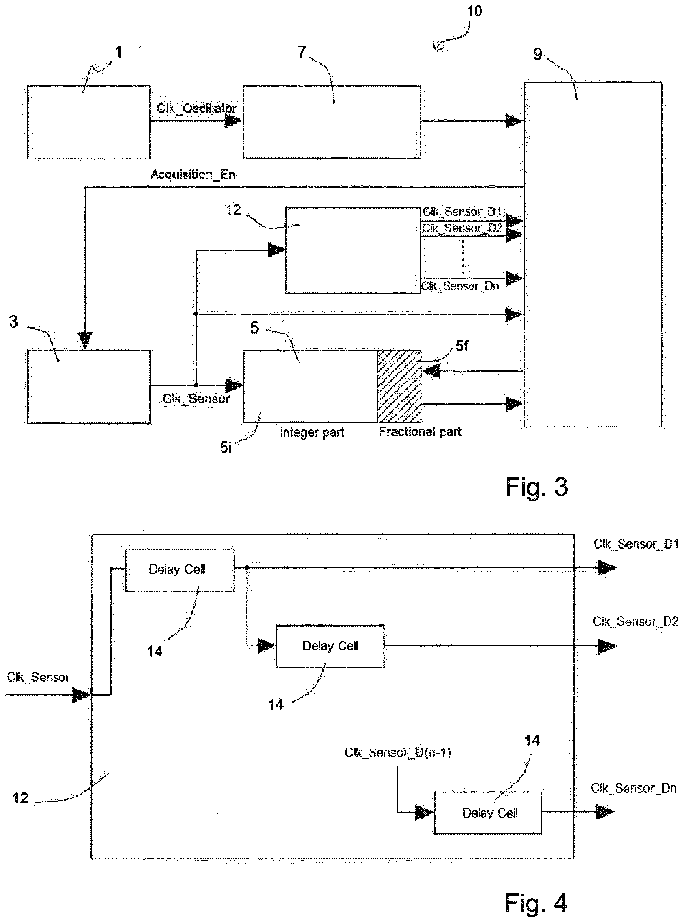

Figure 3 shows a block diagram of an electronic circuit 10 according to an example of the present invention. The illustrated circuit can be used for instance in a watch, for correcting the oscillator temperature dependency. The electronic circuit 10 includes a frequency generator comprising an oscillator 1, in this example a quartz oscillator, arranged to generate a clock signal denoted by Clk_Oscillator in Figure 3. This clock signal is fed to a first counter 7 arranged to count the pulses of the Clk_Oscillator. The Clk_Oscillator is continuously generated by the oscillator 1. The first counter 7 is electrically connected to a control unit 9. The control unit is arranged to generate a data acquisition enable signal (Acquisition_En) to allow the data acquisition to take place. The length of the data acquisition is defined by the number of the pulses counted by the first counter 7. The Acquisition_En is fed from the control unit 9 to a measurement sensor, in this example a temperature sensor 3, of which operation is controlled by the Acquisition_En from the control unit. Based on this signal, the sensor 3 is either switched on or off, and thus the data acquisition or sampling, i.e. counting the pulses from the temperature, is enabled or disabled. In this example, the data acquisition is done from the sensor 3 only when the Acquisition_En is high (e.g. when the value of the signal is 1). Accordingly, when the Acquisition_En is low (e.g. when the value of the signal is 0), there is no data acquisition from the sensor 3. Thus, the Acquisition_En defines a read or data acquisition window during which the data acquisition takes place, as will be explained later.

When the data acquisition is enabled, the sensor 3 generates a digital sensor or clock signal (Clk_Sensor) with a given frequency. During the data acquisition this signal preferably has a substantially constant frequency. This signal is fed to a second counter 5, to the control unit 9 and to a delay element 12. The second counter is arranged to determine and store the number of full signal cycles of the Clk_Sensor and store this number in a first register, referred to as the integer part register 5i. The second counter 5 also comprises a second register, referred to as the fractional part register 5f, for storing fractional or non-full parts of the signal cycles of the Clk_Sensor.

The fractional part register 5f can store any value between 0 and +/-1. For example, when +1 is to be added to the second counter 5, then 1 is added to the second counter 5 and only the integer part register is updated. When -1 needs to be added to the second counter 5, then 1 will be subtracted from the integer part register 5i. When for instance +0.75 is to be added, then 0.75 is added to the fractional part register 5f. The integer part register 5i however remains unchanged in this case. When -0.75 is to be added, then 1 will be subtracted from the integer part register 5i and +0.25 will be added to the fractional part register 5f. Expressed more broadly, when any negative fraction f needs to be added to the second counter, then first 1 is subtracted from the integer part register 5i, and (1-f) is added to the fractional part register 5f. The method of determining the number of the signal cycles or pulses is explained later on in more detail.

The Clk_Sensor is also fed to the delay element 12, where the Clk_Sensor is delayed in the time domain by generating a number $n$ of delayed signals Clk_Sensor_D1, Clk_Sensor_D2,... Clk_Sensor_Dn. These delayed clock signals can also be called secondary clock signals. This delay element 12 is shown in more detail in the block diagram of Figure 4. As can be seen, there is one delay cell 14 for each delayed signal for generating the corresponding delayed signal. In this example the delay cells are identical, and each of the delayed signals Clk_Sensor_D2,... Clk_Sensor_Dn is generated from an already delayed signal. The delay between any two consecutive delayed signals is preferably constant. In this example the delay of the nth signal compared to the Clk_Sensor is substantially one full signal cycle, but this total delay could also be half a cycle for example.

The delayed signals are fed to the control unit 9, where the data for the fractional part register 5f is determined. The number of the delayed signals depends on the ratio between the Clk_Oscillator and the Clk_Sensor and the technology used.

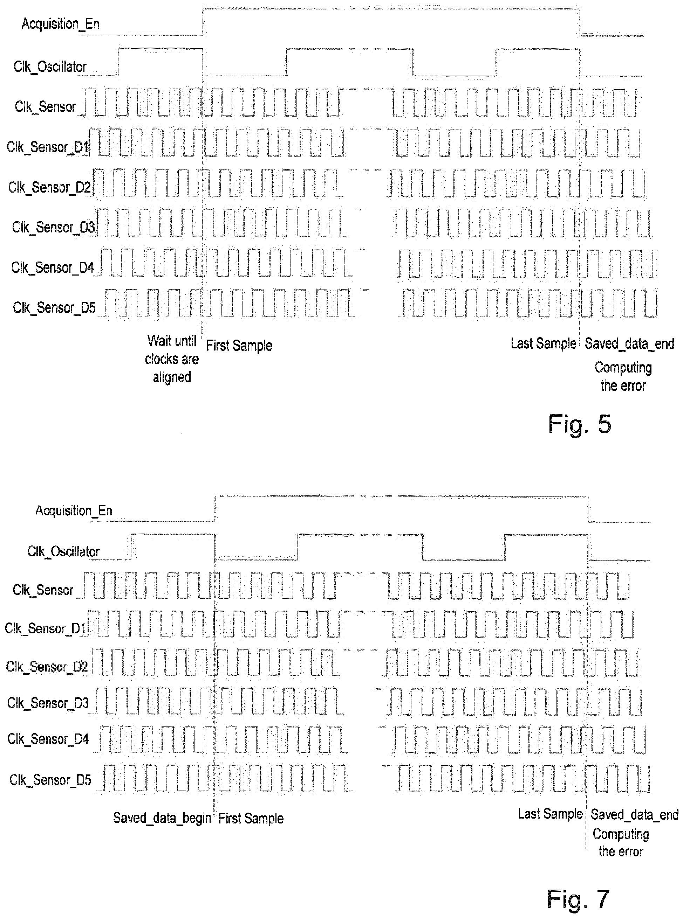

Figure 5 illustrates the data acquisition according to the first embodiment of the present invention. In this simplified example there are five delayed signals. However, the more delayed signals there are, the more the data acquisition precision can be improved. For instance, very precise results can be achieved with eight delayed signals. Typically the number of the delayed signals may be between 4 and 25. As can be seen in Figure 5, the last delayed signal, i.e. Clk_Sensor_D5, is delayed by about one full signal cycle with respect to the Clk_Sensor.

According to the first embodiment, the data acquisition starts when the Clk_Sensor is substantially aligned with the Clk_Oscillator. More specifically, the acquisition starts only when the falling edge (in this example) of the Clk_Oscillator and Clk_sensor are aligned with a precision given by the delayed sensor clock signals. The following algorithm can be used to determine when the Clk_Oscillator and Clk_Sensor are aligned :

1. Go to the next falling edge of the Clk_Oscillator when the Acquisition_En is enabled.

2. Alignment is obtained when the following condition is true : (Clk_Sensor = 0 and Clk_Sensor_D1 = 1 and ... and ... Clk_Sensor_Dw = 1), where w = number of delay cells covering half a period of the Clk_Sensor. If this condition is not true, then the algorithm continues in step 1.

3. The data acquisition can start.

According to the first embodiment there is hardly any error at the beginning of the data acquisition. In other words, the error at the beginning is negligible and thus, in the first embodiment only the precision error at the end of the data acquisition period, i.e. at the moment when the Acquisition_En changes its state (in this example from high to low) needs to be taken into account.

The number of the full signal cycles is determined by counting the number of the falling edges (or alternatively rising edges) from the non-delayed sensor clock signal Clk_Sensor once the above mentioned alignment condition is fulfilled. This can be done by the second counter 5. However, alternatively this could be done by any other suitable element, such as the control unit 9. The result is then stored in the integer part register 5i.

However, only knowing the number of the full signal cycles leads to an error of 0 to 1 signal cycles in the first embodiment, where the error at the beginning of the data acquisition can be omitted. According to the present invention, the data acquisition precision is improved by taking into account also the length of the non-full cycle(s). This is achieved by using the information contained in the sensor clock signals (non-delayed and delayed). More specifically, the signal states of the sensor clock signals are used to determine a correction factor or the length of the non-full signal cycle(s) as explained next in more detail. As explained below, the correction factor is obtained by an algorithm according to which a fraction is added to the saved-data_end at every sensor clock signal until one of the following conditions is fulfilled :

1. The present Clk_Sensor_Dn has a different signal state compared to the signal state of the Clk_Sensor.

2. The sensor clock signal from the last delay cell covering half of the Clk_Sensor period has been considered.

As in the first embodiment, only the acquisition error needs to be taken into account at the end of the measurement window, i.e. in this example at the falling edge of the Acquisition_En, the states of the sensor clock signals at that time instant are recorded. The signal state of the Clk_Sensor is used to decide whether 0.5 needs to be added to the second counter 5 or not. If the state of the Clk_Sensor is 1, a value of 0.5 needs to be added to the second counter 5. If the state of the Clk_Sensor is 0, nothing is added to the second counter 5 at this stage.

Next the delayed sensor clock signals are considered one after the other until one of the above mentioned conditions is fulfilled. At each of these delayed signals a so-called precision parameter x is added to the saved-data_end (or directly to the second counter 5), unless the algorithm is terminated due to the fulfilment of the first of the above conditions. In this case at the last sensor clock signal a value of 0 is added to the second counter 5 and not the precision parameter. The value of the precision parameter x may be obtained as follows :

$$x = 0.5/((\text{number of the delayed sensor clock signals covering}$$

$$\text{one full sensor clock signal cycle - 1)/2})$$

In the example of Figure 5, $x = 0.5/((5 -1)/2) = 0.5/2 = 0.25$, where the number of the delayed sensor clock signals is 5. In other words, the precision parameter depends on the number of the delay cells 14 that cover half of the signal period of the Clk_Sensor, excluding the last one. The last delay cell is excluded because the corresponding delayed sensor clock signal delayed by one clock period with respect to the Clk_Sensor is already used in the first decision to determine whether 0.5 is to be added or not. In this example, there are two delay cells covering half of the Clk_Sensor period. This means that the precision $x = 0.25$.

Next to illustrate the above algorithm, the situation of Figure 5 is evaluated and the correction factor is determined.

- The state of the Clk_Sensor is 1 at the end of the data acquisition. Thus, a value of 0.5 is added to the saved_data_end register.

- Clk_Sensor_D1: A value corresponding to the precision parameter is added to the the saved_data_end register, i.e. 0.25 is added.

- Clk_Sensor_D2 is in the metastability window, i.e. its state could be 0 or 1. If it is 0, then first of the above mentioned conditions is fulfilled, and the execution of the algorithm is terminated. Because the execution is terminated by fulfilling the first of the mentioned conditions, a value 0 is added to the saved_data_end register. Now a correction factor of $0.5 + 0.25 = 0.75$ is added to the second counter 5. In this case we have a negative acquisition error smaller than 0.25. If on the other hand the signal state of the Clk_Sensor_D2 is 1, then a value of 0.25 is added to the the saved_data_end register and the execution of the algorithm is terminated, since the second of the above mentioned conditions is fulfilled. In this case a correction factor of $0.5 + 0.25 + 0.25 = 1.0$ is added to the second counter counter 5 and there is a positive acquisition error smaller than 0.25.

It is to be noted that the last delayed sensor clock signal Clk_Sensor_Dn may have a delay of more than one signal cycle with respect to the Clk_Sensor. In other words, the sensor clock signal delayed by one sensor clock signal cycle can be Clk_Sensor_Dn-z and not Clk_Sensor_Dn. For this reason, before starting the execution of the above algorithm, it needs to be first determined what is the delayed sensor clock signal that has the delay of one signal cycle with respect to the Clk_Sensor. In this way, the the second of the above mentioned conditions can be defined precisely.

Thus, as explained above, the second counter, and more specifically the fractional part register 5f, is updated based on the result of the algorithm. The correction factor can be between 0 and 1. The acquisition error can be 0 with an appropriate number of delayed versions for Clk_Sensor.

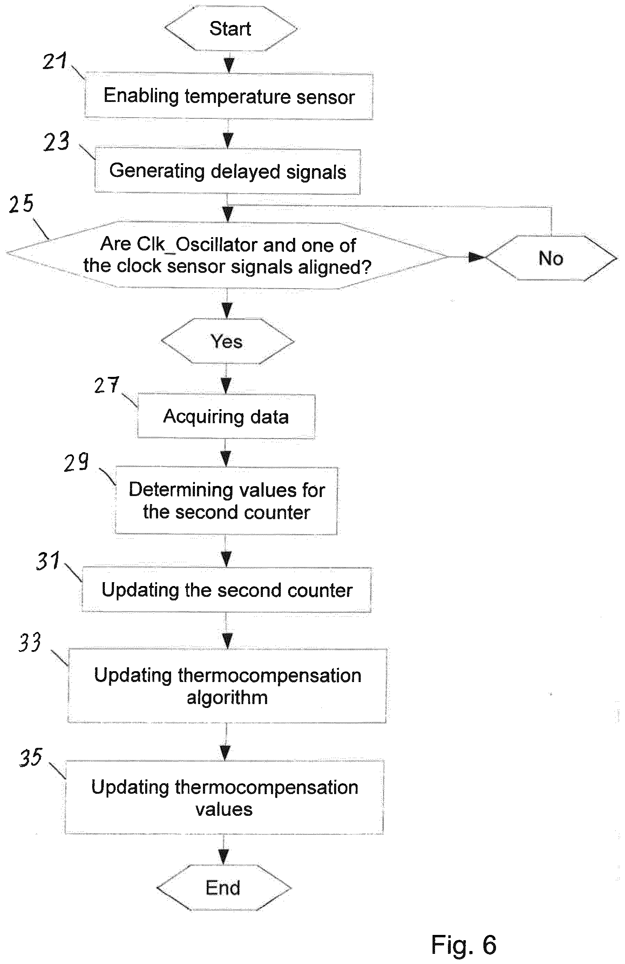

The flow-chart of Figure 6 summaries the data processing method according to the first embodiment. In step 21 the sensor 3 is enabled by the Acquisition_En signal. The sensor 3 is now generating a sensor clock signal from which data acquisition can be done. In step 23 the time delayed clock signals Clk_Sensor_D1, Clk_Sensor_D2,... Clk_Sensor_Dn are created in the delay element 12. In step 25 it is determined whether the Clk_Oscillator and the Clk_Sensor are aligned. This step is repeated until a time alignment of these signals takes place. To achieve the time alignment, further falling or rising edges need to be considered. Once the alignment of the two sensor clock signals is achieved, then the data acquisition can start in step 27.

As a result of the data acquisition, in step 29 the new counter values to be saved in the second counter are determined. In step 31 the values in the second counter are updated. As explained above, both the values in the integer part register 5i and the fractional part register 5f are updated. In step 33 the thermo-compensation algorithm is updated based on the values saved in the second counter 5. Then, in step 35, the thermo-compensation values are updated as a result of updating the thermo-compensation algorithm. Now the temperature dependence of the oscillator 1 can be taken into account.

The signal diagram in Figure 7 illustrates the data acquisition method according to the second embodiment of the present invention. In contrast to the first embodiment, according to the second embodiment there is no need to obtain a signal alignment for the data acquisition. Thus, at the beginning of the data acquisition, there can be some data acquisition error, which is however normally independent from the data acquisition error present at the end of the data acquisition. Therefore, in the second embodiment, the data acquisition error at the beginning of the data acquisition is also taken into account. Also in the second embodiment, the number of the full signal cycles is calculated from the non-delayed sensor clock signal Clk_Sensor. The correction factor is determined by following the same principles as in the first embodiment, except that it now has to be determined both at the beginning and at the end of the data acquisition.

When the data acquisition starts, the signal states of the Clock_Sensor, Clk_Sensor_D1, Clk_Sensor_D2,... Clk_Sensor_Dn are saved in a register saved_data_begin. At the end of the data acquisition process, the signal states of the same signals are saved in the saved_data_end register. From the values saved in the saved_data_begin register, a first correction factor is then calculated, while from the values saved in the saved_data_end register a second correction factor is then calculated. The first correction factor is then subtracted from the value stored in the fractional part register 5f (this value being initially zero). The second correction factor is then added to the value stored in the fractional part register 5f. The correction factors can be between 0.0 and 1.0 for both addition and subtraction. If the value in the fractional part register is about to exceed +1 or go below -1, then 1 is either added to or subtracted from the value of the integer part register 5i. The final data acquisition error can be 0 with an appropriate number of delayed signals Clk_Sensor_D1, Clk_Sensor_D2,... Clk_Sensor_Dn.

According to a third embodiment not covered by the subject-matter of claims 1-12 of the present invention, the delay element 12 is not required. In this embodiment, all the data acquisition is controlled by the Clk_Sensor. The data acquisition is done either both at the end and at the beginning of the read window or only at the end of the read window if an alignment is achieved at the beginning of the read window. The number of the full signal cycles is counted as explained before. According to this simplified embodiment, the precision parameter is not counted at all, and the correction factor is obtained only based on the signal state of the Clk_Sensor at the end and possibly also at the beginning of the read window. More specifically, the signal state of the Clk_Sensor is used to decide whether 0.5 needs to be added to the second counter 5 or not. If the Clk_Sensor is 1 a value of 0.5 needs to be added to the second counter 5. If the Clk_Sensor is 0, nothing is added to the second counter 5 at this stage assuming that the full signal cycles are counted at the falling edge of the Clk_Sensor. If the full signal cycles are counted at the rising edge, then if the Clk_Sensor is 0 a value of 0.5 needs to be added to the second counter 5. If the Clk_Sensor is 1, nothing is added to the second counter 5.

To illustrate the teachings of the present invention, an example of an electronic circuit of a temperature compensated watch was described above, in which a temperature sensor is used to generate a temperature-dependent frequency. Input to the temperature compensation algorithm is the value of the second counter. The integer part register 5i is incremented on every falling or rising edge of the Clk_Sensor for a period of time defined in the first counter that is incrementing up to a defined value on every falling or rising edge of the Clk_Oscillator. The length of the non-full signal cycle(s) was then calculated as explained in relation to the first, second and third embodiments. The overall length in time domain of the full signal cycles and the non-full signal cycle(s) when added together correspond essentially to the length of the read window.

While the invention has been illustrated and described in detail in the drawings and foregoing description, such illustration and description are to be considered illustrative or exemplary and not restrictive, the invention being not limited to the disclosed embodiments. For instance, instead of using a temperature sensor, any other sensor type could also be used, as long as there is need to perform data acquisition or sampling from a signal from that sensor. Also, in the above illustration, the control unit 9 was explained to contain the intelligence for instance to determine the values for the fractional part register 5f. However, the determination of these values could also take place in the second counter or in any other suitable unit. Other embodiments and variants are understood, and can be achieved by those skilled in the art when carrying out the claimed invention, based on a study of the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

**Claims**

1. Method of acquiring data from a digital sensor clock signal in an electronic circuit (10), to correct a quartz oscillator temperature dependency in a watch, said electronic circuit (10) including a frequency generator comprising the quartz oscillator (1) for generating a clock signal for a first counter (7) arranged to count the pulses of the clock signal of the quartz oscillator, a control unit (9), a temperature sensor (3), a second counter (5) and a delay element (12), said first counter (7) being connected to the control unit (9) arranged to generate a data acquisition enable signal for the temperature sensor (3), the length of the data acquisition being defined by the number of the pulses counted by the first counter (7), said temperature sensor (3) supplying a first sensor clock signal (Clk_Sensor) with a given frequency to the second counter (5), of the electronic circuit (10), the second counter comprising a second register (5f) for storing fractional or non-full parts of the first sensor clock signal cycles, to the control unit (9) and to the delay element (12) of the electronic circuit (10) where the first sensor clock signal is delayed in the time domain by generating a number n of delayed signals fed to the control unit (9), where the data for the second register (5f) is determined,

   the method comprising the steps of:

   - receiving (21) the first sensor clock signal from the temperature sensor (3);
   - determining (29) the number of full signal cycles in the first sensor clock signal during a given time period defined by the first counter (7) linked to the oscillator (1);
   - saving (31) the number of the full signal cycles in a first register of the second counter (5);

   the method further comprising the steps of:

   - delaying the first clock signal in the time domain by the delay element (12),
   - generating a number n of delayed sensor clock signals for the control unit (9),
   - determining (27) the signal state of the first sensor clock signal at the end and/or at the beginning of the given time period;
   - determining (29), based on the signal state of at least some of the delayed sensor clock signals at the end and/or at the beginning of the given time period, a correction factor defining an estimated length of the non-full signal cycle(s) in the first sensor clock signal during the given period with the contribution of the n-delayed signals;
   - updating (31) the second register of the second counter (5) with the determined correction factor, and
   - transmitting the values from the first register and the second register in the control unit (9) so that the temperature dependence of the quartz oscillator is corrected.

2. Method according to claim 1, wherein the method further comprises the steps of :

   - receiving (23) time delayed sensor clock signals which are delayed through the delay element (12) with respect to the first sensor clock signal;
   - determining (29), based on the signal state of at least some of the delayed sensor clock signals at the end and/or at the beginning of the given time period, a precision parameter further defining the estimated length of the non-full signal cycle(s) in the sensor clock signal during the given period, where one precision parameter is determined for one delayed sensor clock signal; and
   - updating (31) the first register of the second counter (5) with the determined precision factor.

3. Method according to any one of claims 1 and 2, wherein, when the correction factor and/or the precision parameter is/are determined based on the signal state(s) at the end of the given period, the correction factor and/or the precision parameter is/are added to a value in the second register, while when the correction factor and/or the precision parameter is/are determined based on the signal state(s) at the beginning of the given period, the correction factor and/or the precision parameter is/are subtracted from a value in the second register.

4. Method according to any one of claims 2 and 3, wherein one or more of the time delayed sensor clock signals is delayed to substantially the same extent as its preceding time delayed sensor clock signal.

5. Method according to any one of claims 2 to 4, wherein the time delay of the most delayed sensor clock signal is at least as long as half a cycle of the first sensor clock signal.

6. Method according to any one of the preceding claims, wherein the given time period is defined by a state of a control signal received by the sensor (3) based on the data acquisition enable signal.

7. Method according to any one of the preceding claims, wherein the correction factor determination comprises at the end and/or at the beginning of the given period determining the signal state of the second sensor clock signal and, based on this determination, a value in the second register is updated with the value of 0.5, when this signal state is 1, and when the full signal cycles are counted at the falling edge of the first sensor clock signal; or when this signal state is 0, and when the full signal cycles are counted at the rising edge of the first sensor clock signal.

8. Method according to any one of the preceding claims, wherein before the correction factor determination starts, the first sensor clock signal is substantially aligned with the clock signal of the oscillator in the electronic circuit (10).

9. Method according to claim 8, wherein the signals are aligned when :

   - the state of the first sensor clock signal is 0 and the state of the first delayed sensor clock signal is 1 at the falling or rising edge of the oscillator signal, when the full sensor clock signal cycles are counted at the falling edge of the first sensor clock signal, or
   - the state of the first sensor clock signal is 1 and the state of the first delayed sensor clock signal is 0 at the falling or rising edge of the oscillator signal, when the full sensor clock signal cycles are counted at the rising edge of the first sensor clock signal.

10. Method according to any one of claims 2 to 9, wherein the precision parameter determination comprises the steps of :

   - determining (29) the signal states of at least some of the delayed sensor clock signals at the beginning and/or at the end of the given period;
   - adding (31) or subtracting (31) the precision parameter x, where x = 0.5/((number of the delayed sensor clock signals needed to cover one full first sensor clock signal cycle - 1)/2), to or from a value in the second register of the second counter (5) for each subsequent delayed sensor clock signal after the first sensor clock signal until the last but one of the delayed sensor clock signals fulfilling one of the following conditions,
   wherein the present delayed sensor clock signal has a different signal state compared to the signal state of the first sensor clock signal; and
   wherein the present delayed sensor clock signal covers half of the first sensor clock signal cycle, in which case the precision parameter x is added to the second register of the second counter (5) for the present delayed sensor clock signal provided that the state of the present delayed sensor clock signal does not have a different state from the preceding delayed sensor clock signal.

11. Computer program product comprising instructions for implementing the steps of a method according to any one of the preceding claims when loaded and run on computer means of an electronic device.

12. Electronic circuit (10) for implementing the method for acquiring data from a digital sensor clock signal according to any one of claims 1 to 10 to correct a quartz oscillator temperature dependency in a watch, wherein the electronic circuit (10) includes a frequency generator comprising a quartz oscillator (1) for generating a clock signal, a first counter (7) arranged to count the pulses of the clock signal, said first counter (7) being connected to a control unit (9) of the electronic circuit (10) arranged to generate a data acquisition enable signal for a temperature sensor (3) of the electronic circuit (10), which supplies a first sensor clock signal (Clk_Sensor) with a given frequency to a second counter (5) of the electronic circuit (10), the second counter comprising a first register (5i) comprising an integer part register (5i), a second register (5f) for storing fractional or non-full parts of the first sensor clock signal cycles, to the control unit (9) and to a delay element (12) of the electronic circuit (10) where the first sensor clock signal is delayed in the time domain by generating a number n of delayed signals fed to control unit (9), where the data for the second register (5f) is determined.

**Patentansprüche**

1. Verfahren zur Erfassung von Daten aus einem digitalen Sensortaktsignal in einer elektronischen Schaltung (10), um eine Temperaturabhängigkeit eines Quarzoszillators in einer Uhr zu korrigieren, wobei die elektronische Schaltung (10) umfasst einen Frequenzgenerator mit dem Quarzoszillator (1) zur Erzeugung eines Taktsignals für einen ersten Zähler (7), der zum Zählen der Impulse des Taktsignals des Quarzoszillators angeordnet ist, eine Steuereinheit (9), einen Temperatursensor (3), einen zweiten Zähler (5) und ein Verzögerungselement (12), wobei der erste Zähler (7) mit der Steuereinheit (9) verbunden ist, die so angeordnet ist, dass sie ein Datenerfassungsfreigabesignal für den Temperatursensor (3) erzeugt, die Länge der Datenerfassung durch die Anzahl der von dem ersten Zähler (7) gezählten Impulse definiert ist, wobei der Temperatursensor (3) liefert ein erstes Sensortaktsignal (Clk_Sensor) mit einer gegebenen Frequenz an den zweiten Zähler (5) der elektronischen Schaltung (10), wobei der zweite Zähler umfasst ein zweites Register (5f) zum Speichern von Bruchteilen oder nicht vollständigen Teilen der Zyklen des ersten Sensortaktsignals, an die Steuereinheit (9) und an das Verzögerungselement (12) der elektronischen Schaltung (10), wo das erste Sensortaktsignal im Zeitbereich verzögert wird, indem eine Anzahl n von verzögerten Signalen erzeugt wird, die der Steuereinheit (9) zugeführt werden, wo die Daten für das zweite Register (5f) bestimmt werden, wobei das Verfahren die folgenden Schritte umfasst:

- Empfangen (21) des ersten Sensortaktsignals vom Temperatursensor (3);
- Bestimmen (29) der Anzahl der vollen Signalzyklen im ersten Sensortaktsignal während einer gegebenen Zeitspanne, die durch den mit dem Oszillator (1) verbundenen ersten Zähler (7) definiert ist;
- Speichern (31) der Anzahl der vollen Signalzyklen in einem ersten Register des zweiten Zählers (5);

das Verfahren umfasst weiterhin die folgenden Schritte:

- Verzögern des ersten Taktsignals im Zeitbereich durch das Verzögerungselement (12),
- Erzeugen einer Anzahl n von verzögerten Sensortaktsignalen für die Steuereinheit (9),
- Bestimmen (27) des Signalzustands des ersten Sensortaktsignals am Ende und/oder zu Beginn des gegebenen Zeitraums;
- Bestimmen (29) eines Korrekturfaktors, der auf der Grundlage des Signalzustands mindestens einiger der verzögerten Sensortaktsignale am Ende und/oder am Anfang der gegebenen Zeitperiode eine geschätzte Länge des/der nicht vollständigen Signalzyklus/Signalzyklen im ersten Sensortaktsignal während der gegebenen Periode mit dem Beitrag der n-verzögerten Signale definiert;
- Aktualisieren (31) des zweiten Registers des zweiten Zählers (5) mit dem ermittelten Korrekturfaktor, und
- Übertragen der Werte aus dem ersten Register und dem zweiten Register in die Steuereinheit (9), so dass die Temperaturabhängigkeit des Quarzoszillators korrigiert wird.

2. Verfahren nach Anspruch 1, wobei das Verfahren ferner die folgenden Schritte umfasst:

- Empfangen (23) von zeitverzögerten Sensortaktsignalen, die durch das Verzögerungselement (12) in Bezug auf das erste Sensortaktsignal verzögert sind;
- Bestimmen (29), basierend auf dem Signalzustand von zumindest einigen der verzögerten Sensortaktsignale am Ende und/oder am Anfang der gegebenen Zeitperiode, eines Präzisionsparameters, der weiterhin die geschätzte Länge des/der nicht vollständigen Signalzyklus/Signalzyklen in dem Sensortaktsignal während der gegebenen Periode definiert, wobei ein Präzisionsparameter für ein verzögertes Sensortaktsignal bestimmt wird; und
- Aktualisieren (31) des ersten Registers des zweiten Zählers (5) mit dem ermittelten Präzisionsfaktor.

3. Verfahren nach einem der Ansprüche 1 oder 2, wobei, wenn der Korrekturfaktor und/oder der Präzisionsparameter auf der Grundlage des Signalzustands/der Signalzustände am Ende der gegebenen Periode bestimmt wird/werden, der Korrekturfaktor und/oder der Präzisionsparameter zu einem Wert im zweiten Register addiert wird/werden, während, wenn der Korrekturfaktor und/oder der Präzisionsparameter auf der Grundlage des Signalzustands/der Signalzustände am Anfang der gegebenen Periode bestimmt wird/werden, der Korrekturfaktor und/oder der Präzisionsparameter von einem Wert im zweiten Register subtrahiert wird/werden.

4. Verfahren nach einem der Ansprüche 2 oder 3, wobei eines oder mehrere der zeitverzögerten Sensortaktsignale im Wesentlichen in gleichem Maße verzögert werden wie das vorangehende zeitverzögerte Sensortaktsignal.

5. Verfahren nach einem der Ansprüche 2 bis 4, wobei die Zeitverzögerung des am meisten verzögerten Sensortaktsignals mindestens so lang wie ein halber Zyklus des ersten Sensortaktsignals ist.

6. Verfahren nach einem der vorhergehenden Ansprüche, wobei die vorgegebene Zeitspanne durch einen Zustand eines Steuersignals definiert ist, das von dem Sensor (3) auf der Grundlage des Datenerfassungs-Freigabesignals empfangen wird.

7. Verfahren nach einem der vorhergehenden Ansprüche, wobei das Bestimmen des Korrekturfaktors am Ende und/oder am Anfang der gegebenen Periode das Bestimmen des Signalzustands des zweiten Sensortaktsignals umfasst und auf der Grundlage dieser Bestimmung ein Wert in dem zweiten Register mit dem Wert 0,5 aktualisiert wird, wenn dieser Signalzustand 1 ist und wenn die vollen Signalzyklen bei der fallenden Flanke des ersten Sensortaktsignals gezählt werden; oder wenn dieser Signalzustand 0 ist und wenn die vollen Signalzyklen bei der steigenden Flanke des ersten Sensortaktsignals gezählt werden.

8. Verfahren nach einem der vorhergehenden Ansprüche, wobei vor Beginn der Korrekturfaktorbestimmung das erste Sensortaktsignal im Wesentlichen mit dem Taktsignal des Oszillators in der elektronischen Schaltung (10) abgeglichen wird.

9. Verfahren nach Anspruch 8, bei dem die Signale abgeglichen werden wenn:

- der Zustand des ersten Sensortaktsignals 0 ist und der Zustand des ersten verzögerten Sensortaktsignals 1 ist bei der fallenden oder steigenden Flanke des Oszillatorsignals, wenn die vollen Sensortaktsignalzyklen bei der fallenden Flanke des ersten Sensortaktsignals gezählt werden, oder
- der Zustand des ersten Sensortaktsignals 1 ist und der Zustand des ersten verzögerten Sensortaktsignals 0 ist bei der fallenden oder steigenden Flanke des Oszillatorsignals, wenn die vollen Sensortaktsignalzyklen bei der steigenden Flanke des ersten Sensortaktsignals gezählt werden.

10. Verfahren nach einem der Ansprüche 2 bis 9, wobei das Bestimmen der Präzisionsparameter die folgenden Schritte umfasst:

- Bestimmen (29) der Signalzustände mindestens einiger der verzögerten Sensortaktsignale zu Beginn und/oder am Ende der gegebenen Periode;
- Addieren (31) oder Subtrahieren (31) des Präzisionsparameters x, wobei x = 0,5/((Anzahl der verzögerten Sensortaktsignale, die benötigt werden, um einen vollen ersten Sensortaktsignalzyklus abzudecken - 1)/2), zu oder von einem Wert im zweiten Register des zweiten Zählers (5) für jedes nachfolgende verzögerte Sensortaktsignal nach dem ersten Sensortaktsignal, bis das vorletzte der verzögerten Sensortaktsignale eine der folgenden Bedingungen erfüllt,
wobei das vorliegende verzögerte Sensortaktsignal einen anderen Signalzustand als der Signalzustand des ersten Sensortaktsignals aufweist; und
wobei das gegenwärtige verzögerte Sensortaktsignal die Hälfte des ersten Sensortaktsignalzyklus abdeckt, wobei in diesem Fall der Präzisionsparameter x zum zweiten Register des zweiten Zählers (5) für das gegenwärtige verzögerte Sensortaktsignal hinzugefügt wird, vorausgesetzt, dass der Zustand des gegenwärtigen verzögerten Sensortaktsignals keinen anderen Zustand als das vorhergehende verzögerte Sensortaktsignal aufweist.

11. Computerprogrammprodukt, das Anweisungen zum Implementieren der Schritte eines Verfahrens nach einem der vorhergehenden Ansprüche enthält, wenn es auf Computermittel einer elektronischen Vorrichtung geladen und ausgeführt wird.

12. Elektronische Schaltung (10) zur Durchführung des Verfahrens zur Erfassung von Daten aus einem digitalen Sensortaktsignal nach einem der Ansprüche 1 bis 10 zur Korrektur einer Quarzoszillator-Temperaturabhängigkeit in einer Uhr, wobei die elektronische Schaltung (10) umfasst einen Frequenzgenerator mit einem Quarzoszillator (1) zum Erzeugen eines Taktsignals, einen ersten Zähler (7), der angeordnet ist, um die Impulse des Taktsignals zu zählen, wobei der erste Zähler (7) mit einer Steuereinheit (9) der elektronischen Schaltung (10) verbunden ist, die angeordnet ist, um ein Datenerfassungs-Freigabesignal für einen Temperatursensor (3) der elektronischen Schaltung (10) zu erzeugen, welcher liefert ein erstes Sensortaktsignal (Clk_Sensor) mit einer gegebenen Frequenz an einen zweiten Zähler (5) der elektronischen Schaltung (10), wobei der zweite Zähler umfasst ein erstes Register (5i) umfassend ein ganzzahliges Teilregister (5i), ein zweites Register (5f) zum Speichern von Bruchteilen oder nicht vollständigen Teilen der ersten Sensortaktsignalzyklen, an die Steuereinheit (9) und an ein Verzögerungselement (12) der elektronischen Schaltung (10), wo das erste Sensortaktsignal im Zeitbereich verzögert wird, indem eine Anzahl n von verzögerten Signalen erzeugt wird, die der Steuereinheit (9) zugeführt werden, wo die Daten für das zweite Register (5f) bestimmt werden.

## Revendications

1. Procédé d'acquisition de données à partir d'un signal d'horloge de capteur numérique dans un circuit électronique (10), pour corriger une dépendance vis-à-vis de la température d'oscillateur à quartz dans une montre, ledit circuit électronique (10) comportant un générateur de fréquence comprenant l'oscillateur (1) à quartz pour générer un signal d'horloge pour un premier compteur (7) agencé pour compter les impulsions du signal d'horloge de l'oscillateur à quartz, une unité de commande (9), un capteur de température (3), un deuxième compteur (5) et un élément de retard (12), ledit premier compteur (7) étant connecté à l'unité de commande (9) agencée pour générer un signal d'autorisation d'acquisition de données pour le capteur de température (3), la longueur de l'acquisition de données étant définie par le nombre des impulsions comptées par le premier compteur (7), ledit capteur de température (3) fournissant un premier signal d'horloge de capteur (Clk_Sensor) avec une fréquence donnée au deuxième compteur (5), du circuit électronique (10), le deuxième compteur comprenant un deuxième registre (5f) pour stocker des parties fractionnaires ou non complètes des cycles de premier signal d'horloge de capteur, à l'unité de commande (9) et à l'élément de retard (12) du circuit électronique (10) où le premier signal d'horloge de capteur est retardé dans le domaine temporel en générant un nombre n de signaux retardés injectés dans l'unité de commande (9), où les données pour le deuxième registre (5f) sont déterminées,
le procédé comprenant les étapes consistant à :

- recevoir (21) le premier signal d'horloge de capteur à partir du capteur de température (3) ;
- déterminer (29) le nombre de cycles de signal complets dans le premier signal d'horloge de capteur durant une période de temps donnée définie par le premier compteur (7) relié à l'oscillateur (1) ;
- sauvegarder (31) le nombre des cycles de signal complets dans un premier registre du deuxième compteur (5) ;

le procédé comprenant en outre les étapes consistant à :

- retarder le premier signal d'horloge dans le domaine temporel par l'élément de retard (12),
- générer un nombre n de signaux d'horloge de capteur retardés pour l'unité de commande (9),
- déterminer (27) l'état de signal du premier signal d'horloge de capteur à la fin et/ou au début de la période de temps donnée ;
- déterminer (29), sur la base de l'état de signal d'au moins certains des signaux d'horloge de capteur retardés à la fin et/ou au début de la période de temps donnée, un facteur de correction définissant une longueur estimée du ou des cycles de signal non complets dans le premier signal d'horloge de capteur durant la période donnée avec la contribution des n signaux retardés ;
- mettre à jour (31) le deuxième registre du deuxième compteur (5) avec le facteur de correction déterminé, et
- transmettre les valeurs à partir du premier registre et du deuxième registre dans l'unité de commande (9) de façon à ce que la dépendance vis-à-vis de la température de l'oscillateur à quartz soit corrigée.

2. Procédé selon la revendication 1, dans lequel le procédé comprend en outre les étapes consistant à :

- recevoir (23) des signaux d'horloge de capteur retardés dans le temps qui sont retardés par l'intermédiaire de l'élément de retard (12) par rapport au premier signal d'horloge de capteur ;
- déterminer (29), sur la base de l'état de signal d'au moins certains des signaux d'horloge de capteur retardés à la fin et/ou au début de la période de temps donnée, un paramètre de précision définissant en outre la longueur estimée du ou des cycles de signal non complets dans le signal d'horloge de capteur durant la période donnée, où un paramètre de précision est déterminé pour un signal d'horloge de capteur retardé ; et
- mettre à jour (31) le premier registre du deuxième compteur (5) avec le facteur de précision déterminé.

3. Procédé selon l'une quelconque des revendications 1 et 2, dans lequel, lorsque le facteur de correction et/ou le paramètre de précision sont déterminés sur la base du ou des états de signal à la fin de la période donnée, le facteur de correction et/ou le paramètre de précision sont ajoutés à une valeur dans le deuxième registre, tandis que lorsque le facteur de correction et/ou le paramètre de précision sont déterminés sur la base du ou des états de signal au début de la période donnée, le facteur de correction et/ou le paramètre de précision sont soustraits d'une valeur dans le deuxième registre.

4. Procédé selon l'une quelconque des revendications 2 et 3, dans lequel un ou plusieurs des signaux d'horloge de capteur retardés dans le temps sont retardés dans sensiblement la même mesure que leur signal d'horloge de capteur retardé dans le temps précédent.

5. Procédé selon l'une quelconque des revendications 2 à 4, dans lequel le temps de retard du signal d'horloge de capteur le plus retardé est au moins aussi long que la moitié d'un cycle du premier signal d'horloge de capteur.

6. Procédé selon l'une quelconque des revendications précédentes, dans lequel la période de temps donnée est définie par un état d'un signal de commande reçu par le capteur (3) sur la base du signal d'autorisation d'acquisition de données.

7. Procédé selon l'une quelconque des revendications précédentes, dans lequel la détermination de facteur de correction comprend à la fin et/ou au début de la période donnée la détermination de l'état de signal du deuxième signal d'horloge de capteur et, sur la base de cette détermination, une valeur dans le deuxième registre est mise à jour avec la valeur de 0,5, lorsque cet état de signal est 1, et lorsque les cycles de signal complets sont comptés au niveau du front descendant du premier signal d'horloge de capteur ; ou lorsque cet état de signal est 0, et lorsque les cycles de signal complets sont comptés au niveau du front montant du premier signal d'horloge de capteur.

8. Procédé selon l'une quelconque des revendications précédentes, dans lequel avant que la détermination de facteur de correction ne commence, le premier signal d'horloge de capteur est sensiblement aligné sur le signal d'horloge de l'oscillateur dans le circuit électronique (10).

9. Procédé selon la revendication 8, dans lequel les signaux sont alignés lorsque :

- l'état du premier signal d'horloge de capteur est 0 et l'état du premier signal d'horloge de capteur retardé est 1 au niveau du front descendant ou montant du signal d'oscillateur, lorsque les cycles de signal d'horloge de capteur complets sont comptés au niveau du front descendant du premier signal d'horloge de capteur, ou
- l'état du premier signal d'horloge de capteur est 1 et l'état du premier signal d'horloge de capteur retardé est 0 au niveau du front descendant ou montant du signal d'oscillateur, lorsque les cycles de signal d'horloge de capteur complets sont comptés au niveau du front montant du premier signal d'horloge de capteur.

10. Procédé selon l'une quelconque des revendications 2 à 9, dans lequel la détermination de paramètre de précision comprend les étapes consistant à :

- déterminer (29) les états de signal d'au moins certains des signaux d'horloge de capteur retardés au début et/ou à la fin de la période donnée ;
- ajouter (31) ou soustraire (31) le paramètre de précision x, où x = 0,5/((nombre des signaux d'horloge de capteur retardés nécessaires pour couvrir un cycle de premier signal d'horloge de capteur complet - 1)/2), à ou d'une valeur dans le deuxième registre du deuxième compteur (5) pour chaque signal d'horloge de capteur retardé ultérieur après le premier signal d'horloge de capteur jusqu'à l'avant-dernier des signaux d'horloge de capteur retardés remplissant une des conditions suivantes,
dans lequel le présent signal d'horloge de capteur retardé a un état de signal différent par rapport à l'état de signal du premier signal d'horloge de capteur ; et
dans lequel le présent signal d'horloge de capteur retardé couvre la moitié du cycle de premier signal d'horloge de capteur, dans ce cas-là le paramètre de précision x est ajouté au deuxième registre du deuxième compteur (5) pour le présent signal d'horloge de capteur retardé à condition que l'état du présent signal d'horloge de capteur retardé n'ait pas un état différent du précédent signal d'horloge de capteur retardé.

11. Produit programme d'ordinateur comprenant des instructions pour mettre en oeuvre les étapes d'un procédé selon l'une quelconque des revendications précédentes lorsqu'il est chargé et exécuté sur des moyens informatiques d'un dispositif électronique.

12. Circuit électronique (10) pour mettre en oeuvre le procédé pour acquérir des données à partir d'un signal d'horloge de capteur numérique selon l'une quelconque des revendications 1 à 10 pour corriger une dépendance vis-à-vis de la température d'oscillateur à quartz dans une montre, dans lequel le circuit électronique (10) comporte un générateur de fréquence comprenant un oscillateur (1) à quartz pour générer un signal d'horloge, un premier compteur (7) agencé pour compter les impulsions du signal d'horloge, ledit premier compteur (7) étant connecté à une unité de commande (9) du circuit électronique (10) agencée pour générer un signal d'autorisation d'acquisition de données pour un capteur de température (3) du circuit électronique (10), qui fournit un premier signal d'horloge de capteur (Clk_Sensor) avec une fréquence donnée à un deuxième compteur (5) du circuit électronique (10), le deuxième compteur comprenant un premier registre (5i) comprenant un registre de parties entières (5i), un deuxième registre (5f) pour stocker des parties fractionnaires ou non complètes des cycles de premier signal d'horloge de capteur, à l'unité de commande (9) et à un élément de retard (12) du circuit électronique (10) où le premier signal d'horloge de capteur est retardé dans le domaine temporel en générant un nombre n de signaux retardés injectés dans l'unité de commande (9), où les données pour le deuxième registre (5f) sont déterminées.

1

Clk_Oscillator

7

9

Acquisition_En

3

5

Clk_Sensor

Fig. 1

Acquisition_En

Clk_Oscillator

Clk_Sensor

Acquisition
error

Acquisition
error

First Sample

Last Sample

Fig. 2

Fig. 3

Fig. 4

Acquisition_En

Clk_Oscillator

Clk_Sensor

Clk_Sensor_D1

Clk_Sensor_D2

Clk_Sensor_D3

Clk_Sensor_D4

Clk_Sensor_D5

Wait until | First Sample
clocks are
aligned

Last Sample | Saved_data_end
Computing
the error

## Fig. 5

Acquisition_En

Clk_Oscillator

Clk_Sensor

Clk_Sensor_D1

Clk_Sensor_D2

Clk_Sensor_D3

Clk_Sensor_D4

Clk_Sensor_D5

Saved_data_begin | First Sample

Last Sample | Saved_data_end
Computing
the error

## Fig. 7

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2546709 A1
- EP 2546657 A1
- US 2009160569 A1
- US 2012307866 A1